# EUROPÄISCHE PATENTSCHRIFT

(11) **EP 1 989 010 B1**
(45) Veröffentlichungstag und Bekanntmachung des Hinweises auf die Patenterteilung: **17.06.2009**
(21) Anmeldenummer: 06829639.1
(22) Anmeldetag: 15.12.2006
(51) Int. Cl.: B21D 37/14, B21D 37/20

(54) **VERFAHREN ZUR EINARBEITUNG VON PRESSWERKZEUGEN UNTER VERWENDUNG VON TUSCHIERFARBE**
Method of spotting press dies by using a dye
Méthode de retouche "au bleu" d'outils de presse à l'aide d'une peinture à toucher

(30) Priorität: 22.02.2006 DE 102006008189
(43) Veröffentlichungstag der Anmeldung: 12.11.2008
(73) Patentinhaber: AUDI AG, 85045 Ingolstadt (DE)
(72) Erfinder: KERSCHNER, Matthias, 85296 Rohrbach (DE); HOLLERBACH, Josef, 97422 Schweinfurt (DE)
(74) Vertreter: Geissler, Manfred
(86) Internationale Anmeldenummer: PCT/EP2006/012089
(87) Internationale Veröffentlichungsnummer: WO 2007/095987

(56) Entgegenhaltungen:
- DE-A1- 4 311 154
- GB-A- 672 763
- US-A1- 3 172 209

## Beschreibung

Die Erfindung bezieht sich auf ein Verfahren zur Einarbeitung von Presswerkzeugen unter Verwendung von Tuschierfarbe gemäß dem Oberbegriff des Patentanspruchs 1. Ein solches Verfahren is aus der DE 4 311 154 C2 bekannt. Bei der erstellung von Tiefziehwerzeugen für beispielsweise Karosserieblechteile erfolgt im allgemeinen eine abschließende Endbearbeitung oder Nachbearbeitung der Werkzeugflächen, um während eines Tiefziehvorganges eine zu hohe lokale Flächenpressung der Karosserieblechteile zu vermeiden. Diese könnte unter anderem Ursache für Rissebildung sein. Daher können z. B. für die abschließende Endbearbeitung der Werkzeugflächen in einem so genannten Tuschiervorgang die nachzubearbeitenden Flächenbereiche der Werkzeuge identifiziert und nachfolgend beispielsweise durch ein Schaben oder Schleifen abgetragen werden.

So ist etwa aus der DE 43 11 154 C2 eine Vorrichtung sowie ein Verfahren bekannt, wobei in einem ersten Arbeitsschritt zum Identifizieren eines nachzubearbeitenden Flächenbereiches einer Werkzeugfläche zunächst ein Blechteil mit Tuschierfarbe bestrichen wird. Das Blechteil wird in eine Tuschierpresse eingelegt und zwischen zwei Werkzeughälften des Werkzeuges gepresst bzw. tiefgezogen. Anhand eines Farbabdruckes des tuschierten Blechteiles auf der jeweiligen Werkzeugfläche können die Flächenbereiche mit zu hoher Flächenpressung identifiziert werden. Flächenbereiche mit einem Farbabdruck hoher Farbintensität üben eine zu hohe Flächenpressung aus und müssen in einem zweiten Arbeitsschritt durch eine entsprechende Oberflächenbearbeitung nachbearbeitet werden.

Für eine effiziente Nutzung der Tuschierpresse erfolgt die Endbearbeitung der identifizierten Flächenbereiche der Werkzeugflächen in der Regel außerhalb der Tuschierpresse. Dadurch ist die Tuschierpressenbelegung zeitsparend auf den eigentlichen Tuschiervorgang begrenzt. Die Werkzeugfläche wird nach dem Tuschiervorgang, wie bereits erwähnt, in manueller Endbearbeitung durch Schaben oder Schleifen weiter bearbeitet. Diese Oberflächenbehandlung ist einerseits zeitaufwendig, andererseits liegt die Bearbeitung der identifizierten Flächenbereiche, insbesondere das Maß eines Höhenabtrages, im subjektiven Ermessen des jeweiligen Werkers. Auf Grund der spiegelnden metallischen Oberfläche ist das optische Erfassen der Werkzeugoberfläche bei Tages- bzw. Hallenlicht nicht fehlerfrei möglich (Reflexionen), so dass auch dadurch das Arbeitsergebnis negativ beeinflusst werden kann.

Es sind auch bereits Bestrebungen zu verzeichnen, den Einarbeitungsprozess eines Press- bzw. Umformwerkzeuges soweit als möglich zu automatisieren, wie sich beispielsweise aus einem internen Stand der Technik, der später in der DE-A-102006001712 Veröffentlicht worden ist, ableiten lässt. Dort wird eine Vorrichtung zur Endbearbeitung eines Umformwerkzeuges beschrieben, die eine Bearbeitungseinrichtung aufweist, die den Farbabdruck auf der Werkzeugoberfläche elektronisch erfasst und in Abhängigkeit von der Intensität des Farbabdruckes die Lage und/oder Dimension des nachzubearbeitenden Flächenbereiches ermittelt und diesen entsprechend nachbearbeitet. Die Bearbeitungseinrichtung weist auch eine Analyseeinheit auf, die die Werkzeugfläche mit dem Farbabdruck vorzugsweise optisch erfasst und entsprechende Bilddaten der Werkzeugfläche erzeugt.

Von daher liegt der Erfindung die Aufgabe zugrunde, die Verfahrensweise zur Einarbeitung von Presswerkzeugen unter Verwendung von Tuschierfarbe dahingehend weiter zu optimieren, dass sowohl bezüglich manueller Einarbeitung als auch bezüglich weitgehend automatisierter Einarbeitung ein fehlerfreies optisches Erfassen der Werkzeugoberfläche bzw. der Tuschierfarbe möglich ist.

Diese Aufgabe wird gelöst mit einem Verfahren gemäß den Merkmalen des Patentanspruchs 1.

Die erfindungsgemäße Lösung ist in der Verwendung fluoreszierender Tuschierfarbe zu sehen. Vorteilhafte Ausgestaltungen und Weiterbildungen der Erfindung sind in den Unteransprüchen dargelegt und beansprucht.

Vorrichtungen und Verfahren zur Detektion einer fluoreszierenden Substanz auf einer technischen Oberfläche sind an sich bereits bekannter Stand der Technik, wie sich aus der DE 102 44 819 A1 ergibt. Dort wird eine Vorrichtung sowie ein Verfahren zur Detektion wenigstens einer auf einer technischen Oberfläche befindlichen Materialschicht mit wenigstens einer die technische Oberfläche beleuchtenden Lichtquelle beschrieben, die ein auf die Materialschicht gerichtetes Lichtbündel mit einer die Materialschicht zu Fluoreszenzstrahlung anregenden Wellenlänge aussendet, wobei wenigstens eine Detektoreinheit vorgesehen ist, die die Fluoreszenzstrahlung empfängt und wobei des weiteren eine Auswerteeinheit vorgesehen ist, die eine qualitative Materialbestimmung der fluoreszierenden Materialschicht in Abhängigkeit der Fluoreszenzstrahlung vornimmt. Hinweise auf den vorliegenden Anwendungsfall lassen sich aus diesem vorbekannten Stand der Technik aber nicht ableiten.

Die erfindungsgemäße Verwendung einer fluoreszierenden Farbe wird vorteilhaft ergänzt durch die Verwendung von Schwarz- bzw. UV-Licht, um die Werkzeugoberfläche reflexionsfrei zu beleuchten. Als fluoreszierende Tuschierfarbe kommt vorteilhaft eine Mischung aus dem Farbstoff Uranin (Fluorescein -di-Natriumsalz) Na₂C₂₀ H₁₀O₅ und einer beliebigen wasserunlöslichen bzw. wasserlöslichen Trägersubstanz zum Einsatz. Wird diese Tuschierfarbe darüber hinaus von Schwarz- bzw. UV-Licht angestrahlt, hebt sich der Tuschierfleck als gelbe, leuchtende Kontur vom Rest der Werkzeugoberfläche besonders eindeutig und bestens erkennbar ab.

Der Trägerstoff selbst ist je nach Anwendungsfall frei wählbar und in der Dichte je nach Bedarf variierbar. Für den Anwendungsfall des Tuschierens sollte die Konsistenz etwas zäher gewählt werden, um das Tuschierbild durch das Zerlaufen der Farbe nicht zu verfälschen.

## Patentansprüche

1. Verfahren zur Einarbeitung von Presswerkzeugen unter Verwendung von Tuschierfarbe, **gekennzeichnet durch** die Verwendung einer fluoreszierenden Tuschierfarbe.

2. Verfahren nach Anspruch 1, **gekennzeichnet durch** die Verwendung einer Mischung aus dem Farbstoff Uranin (Na₂C₂₀ H₁₀O₅) und einer beliebigen wasserunlöslichen oder wasserlöslichen Trägersubstanz als Tuschierfarbe.

3. Verfahren nach Anspruch 1, **gekennzeichnet durch** die Verwendung von UV-Licht zum Bestrahlen einer mit Tuschierfarbe eingefärbten Werkzeugoberfläche.

## Claims

1. Method for finishing press tools using marking colour, **characterised by** the use of marking colour that is fluorescent.

2. Method according to claim 1, **characterised by** the use, as marking colour, of a mixture of the colourant Uranin (Na₂C₂₀H₁₀O₅) with any desired water insoluble or water soluble carrier.

3. Method according to claim 1, **characterised by** the use of ultra violet light for irradiating a tool surface that is coloured with marking colour.

## Revendications

1. Procédé servant à préparer des outils pour presse en utilisant de la peinture de marquage, **caractérisé par** l'utilisation d'une peinture de marquage fluorescente.

2. Procédé selon la revendication 1, **caractérisé par** l'utilisation d'un mélange se composant du colorant uranine (Na₂C₂₀H₁₀O₅) et d'une substance support au choix insoluble ou dissoluble comme peinture de marquage.

3. Procédé selon la revendication 1, **caractérisé par** l'utilisation d'une lumière UV servant à irradier la surface d'un outil colorée avec de la peinture de marquage.
